# EUROPEAN PATENT SPECIFICATION

(11) **EP 0 404 270 B1**
(45) Date of publication and mention of the grant of the patent: **24.11.1993**
(21) Application number: 90201629.4
(22) Date of filing: 20.06.1990
(51) Int. Cl.: B62K 27/12

(54) **Combination of a bicycle and a cart and the composing parts thereof**
Kombination eines Fahrrads mit einem Handwagen und deren Bestandteile
Combinaison d'une bicyclette et d'un chariot et les pièces qui la composent

(30) Priority: 21.06.1989 NL 8901561
(43) Date of publication of application: 27.12.1990
(73) Proprietor: Lassche, Jakob, NL-7608 XS Almelo (NL)
(72) Inventor: Lassche, Jakob, NL-7608 XS Almelo (NL)
(74) Representative: Schumann, Bernard Herman Johan

(56) References cited:
- FR-A- 1 534 010
- FR-A- 2 203 346
- FR-E- 51 041
- GB-A- 1 522 021
- NL-A- 282 990

## Description

The invention relates to a combination of a two-wheeled transporting means, in particular a bicycle, and a cart provided with wheels, which cart can be releasably coupled to the transporting means.

Such a combination is known from FR-A-1 534 010.

The structure of this prior art combination is such that adaptations to the bicycle have to be made in order to be adapted as part of the combination. In view of this aspect, it is a purpose of the invention to provide a combination of the said type in a way such that no adaptation of the bicycle is basically necessary.

Another disadvantage of the prior art combination is that the cart is designed in such a way, that it comprises a luggage carrier that normally forms part of a usual and commercially readily available bicycle. This structure is relatively heavy. In view of this aspect of the prior art combination, it is a purpose of the invention to design a combination of the said type in a way such that the cart can have a relatively light-weight structure.

Furthermore, the cart of the prior art combination is provided with a pair of wheels carried by arms that individually have to be swung to an extended position and locked in that position, before the cart can be pulled by a user. Relative to this aspect it is a purpose of the invention to provide a combination of the said type, in which the cart does not need to be subjected to additional operations before it can be used as a self-standing independent cart.

The prior art combination is furthermore designed such, that it is not possible to carry a bag, that may be coupled with the cart, in a horizontal position. Relative to this aspect it is a purpose of the invention to design a combination of the said type such that a bag, coupled with or forming part of the cart can be carried by the de-coupled cart in a horizontal position.

The prior art combination is furthermore designed such, that in case of a relatively heavily-loaded cart the user has to lift the load to be transported by the combination over a relatively large height. Relative to this aspect it is a purpose of the invention to design a combination of the said type in a way such that with only minimal effort the user can couple a cart with the two-wheeled transporting means, even if the cart carries a relatively heavy load, e.g. heavy shopping articles, or, as the case may be, a child sitting on the cart.

With specific reference to the last-mentioned purpose, the combination according to the invention is characterized in that the cart is coupled with the transporting means by means of a luggage carrier present on the transporting means and in that the front part of the cart is provided with roller means for rolling over the luggage carrier.

The combination of the invention not only lands itself extremely well to transporting articles of shopping, mail and the like, but, as briefly mentioned already, can also be embodied such that the cart carries a child's seat. In this case in a specific embodiment a combination of one or two bags and a child's seat may be used.

The combination of the invention is very convenient e.g. in the case, in which the wheels of the cart and the roller means have a mutual position such that, when the cart is being removed from the transporting means or being arranged thereon, the roller means can support on the luggage carrier at the same time as the wheels rest on the ground. The coupling of the cart on the transporting means and decoupling thereof can in that case be realized with relatively little force.

In order to ensure a very easy, stable positioning the embodiment is recommended wherein on the front side of the luggage carrier a recess is present in which can rest a front portion of the cart.

For obvious reasons the combination is preferably provided with locking means for locking the cart to the transporting means by means of a lock.

Very practical in this respect is the embodiment in which the cart has a pivoting hand-grip which can be used in a folded out, first stable position to pull or push the cart by hand and which can be used in a folded in, second position as first part of the locking means through co-action with a second part thereof present on the transporting means, such as a bracket with holes for passage of the hook of a padlock.

The pivoting hand-grip can for instance be embodied as a bracket and, when bags are used arranged on the cart, also serves to block the upward directed movement of the covers of these bags.

In a particular embodiment the height of the wheels can be adjustable.

In order to prevent balance problems as far as possible, the embodiment is recommended in which the cart displays a symmetrical construction.

In an embodiment already briefly described the cart carries at least one bag. Alternatively or also in combination therewith the cart may also comprise a child's seat.

A variant has the feature that the or each bag has a sufficient stiffness and strength and that at this position the tube frame is interrupted.

A light but nevertheless very stiff construction is ensured with an embodiment wherein the cart comprises a tube frame.

The combination is preferably embodied such that the wheels of the cart have at least a predetermined distance to the ground.

The invention will now be elucidated with reference to the annexed drawing. In the drawing:
the figures 1-5 show a combination according to the invention in different stages of combination;
fig. 6 is a view corresponding with fig. 5 of a variant;
fig. 7 shows in perspective view a tube frame of a cart with wheels;
fig. 8 is a view corresponding with fig. 7 of a cart with two bags;
fig. 9 is a rear view of a combination;
fig. 10 shows a perspective view of the cart as in fig. 8 as part of a ready-for-use combination with a bicycle;
fig. 11 is a view corresponding with fig. 8 of a cart having four instead of two wheels;
fig. 12 is a variant of the cart according to fig. 11, wherein instead of two high side bags use is made of two relatively low side bags, in combination with a child's seat;
fig. 13 is a perspective view, partly broken away, of an alternative;
fig. 14 shows the detail XIV from fig. 13;
fig. 15 shows a variant in which the stiff bags partly fulfill the bearing function of the tube frame;
fig. 16 shows the detail XVI from fig. 15; and
fig. 17 shows the detail XVII from fig. 15.

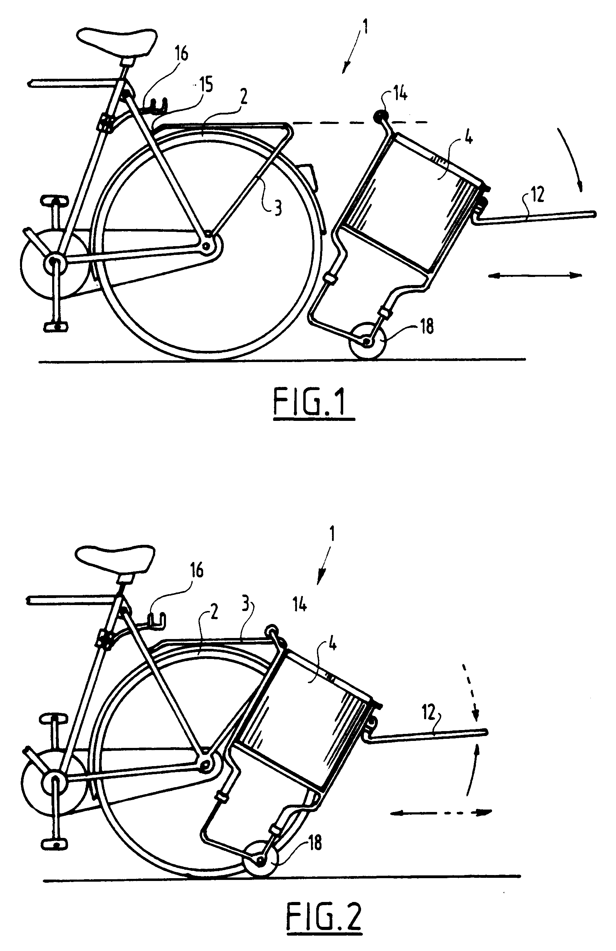

Fig. 1-5 show the manner in which a combination 1 according to the invention can be made by a user. The combination 1 comprises a bicycle 2 and a cart 4 for arranging on or arranged on the luggage carrier 3 thereof.

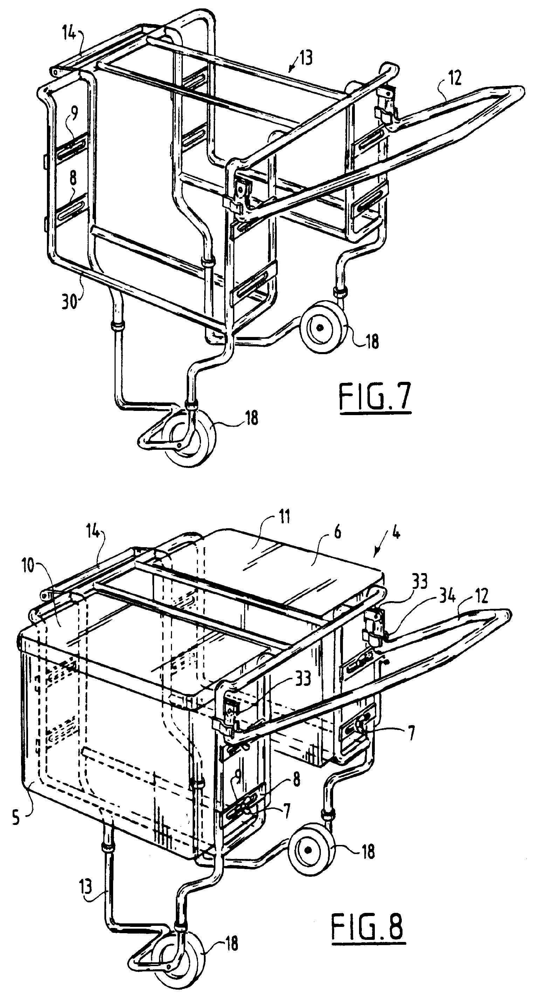

As will be apparent with reference to fig. 7 and 8 the cart 4 comprises two bags 5, 6 which are fastened by means of wing nuts 7 to attaching strips 8 with slotted holes 9, which attaching strips are fixed to a frame 13. The bags 5, 6 each carry a cover 10, 11.

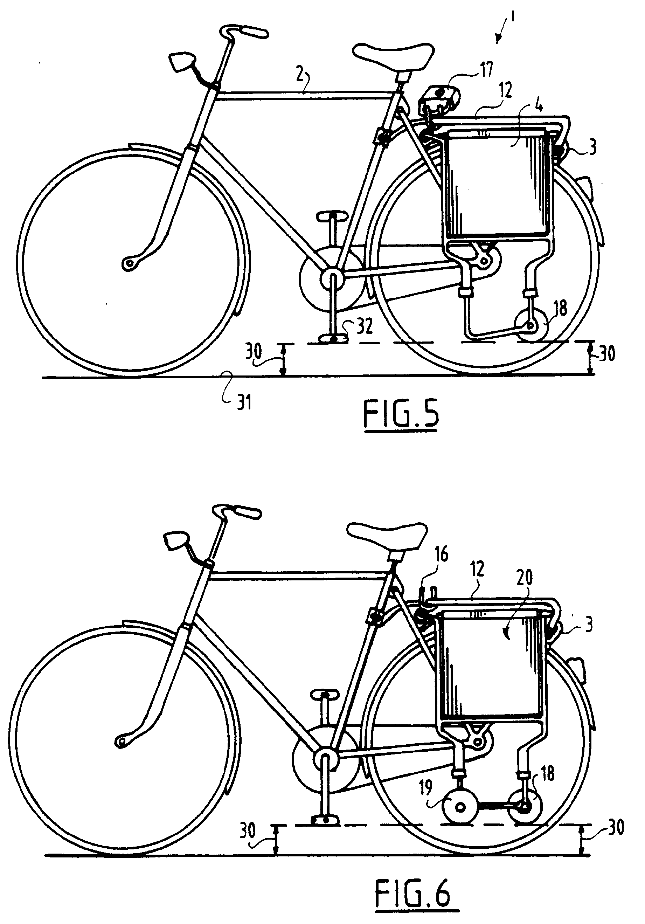

The cart 4 bears a pivotable hand-grip 12 in the form of a bracket which can serve in the manner shown for example in fig. 1 to pull or push the cart 4 and, as can be seen clearly in fig. 5 and elsewhere, can serve in the ready-for-use position of the combination 1 to fix the cart 4 to the bicycle 2 secured against theft and also to lock the covers 10, 11 in the closed position.

Fig. 1 shows the situation in which a user wishes to couple the cart 4 to the bicycle 2. At the front on the top side the cart 4 bears a roller 14 which, as fig. 1 shows clearly, has a distance from the wheels 18 of the cart 4 such that in the manner shown the roller 14 can be carried easily from the situation shown in fig. 1 to the situation shown in fig. 2, wherein the roller can move forward by rolling onto the luggage carrier 3.

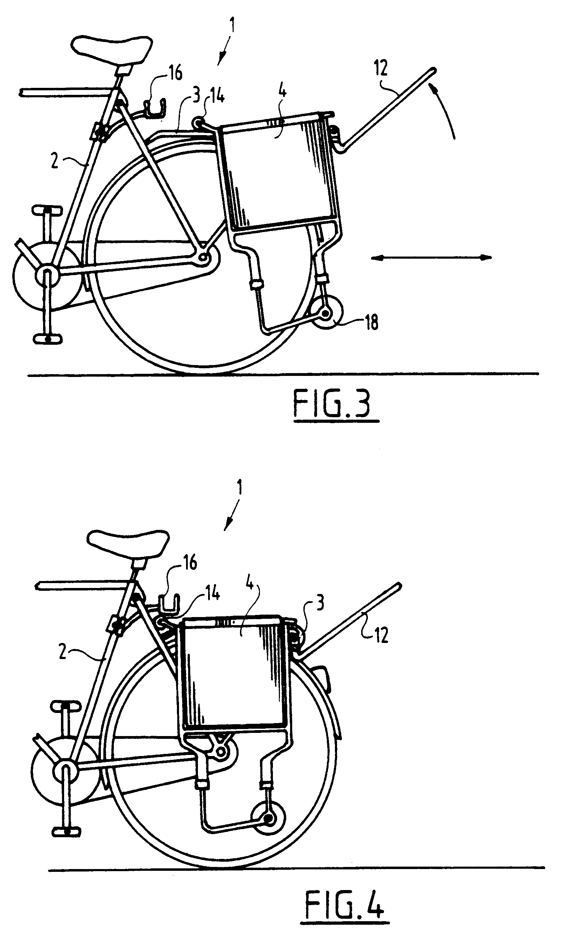

Fig. 3 shows the stage in which the wheels 18 are raised by the user from the ground and the roller 14 is pushed forward by maneuvering the hand-grip 12 and as according to fig. 3 can then come to rest in a recess 15. In the situation shown in fig. 4 the bracket 12 can subsequently be folded forward to be placed in co-action with a bracket 16 which is provided with holes wherethrough the hook of a padlock 17 can be placed. Hereby is achieved that the cart 4 can only be removed from the bicycle 2 by a potential thief with considerable effort. The hand-grip 12 moreover blocks the covers 10, 11 so that the contents of the cart 4 are protected against theft. As the figures 7 and 8 show clearly, the cart 4 bears two wheels 18.

As indicated with an arrow 30 the wheels 18 are at a height relative to the ground 31 such that in bends they cannot touch the ground sooner than the pedals 32.

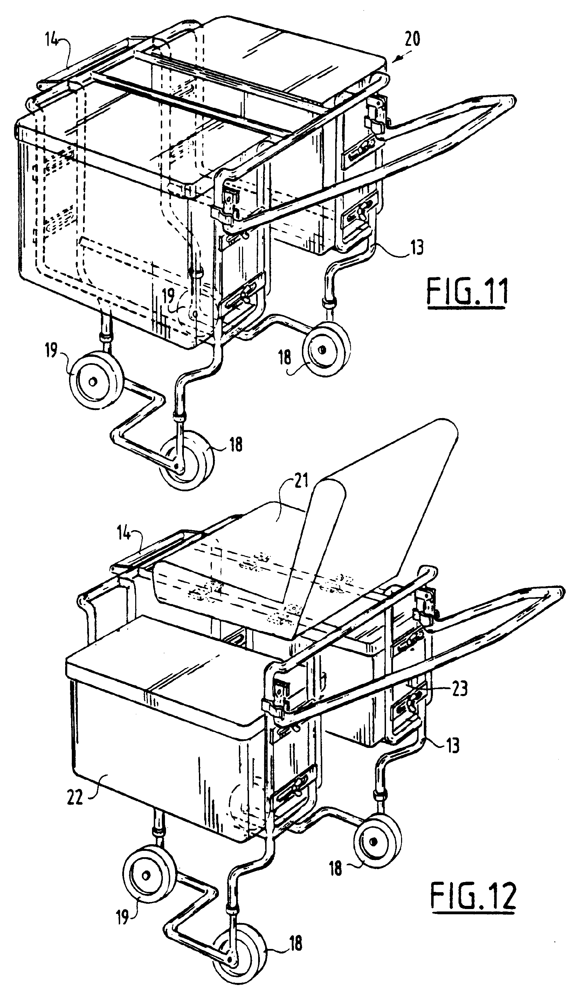

Fig. 6 shows a variant with a cart 20 having two extra wheels 19. Fig. 11 shows this cart 20 in more detail.

Fig. 7 shows the frame 13 of the cart 4.

Fig. 8 shows the combination of the frame 13 with the bags 5, 6 in the situation wherein the user can pull or push the cart separately. It is apparent that the hand-grip 12 is coupled on the frame 13 with hinges 33. Locking members 34 fix the bracket 12 releasably in the position shown.

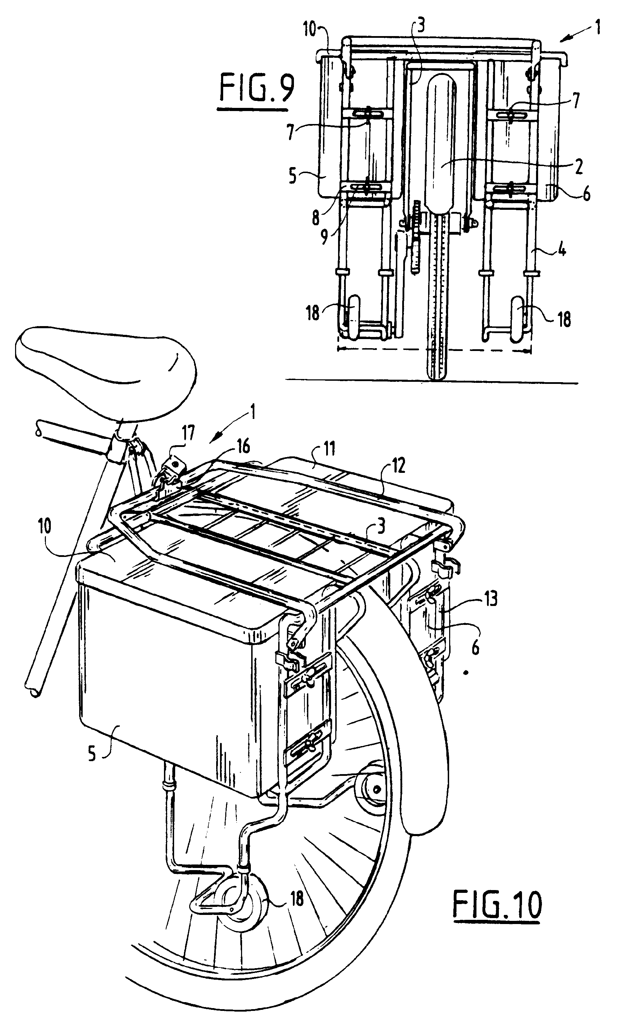

Fig. 9 shows in rear view the manner in which the cart 4 is carried by the luggage carrier 3.

Fig. 10 again shows in perspective view the rear part of the combination 1 in detail. In this situation the bracket 12 is folded down to the front and is unbreakably connected with a padlock 17 to the bracket 16 which is coupled to the bicycle 2.

Fig. 11 has already been discussed above.

Fig. 12 shows a variant wherein use is made of two less high bags 22 and 23 so that space is still available on the top side for the legs of a child. For this purpose the frame 13 bears a child's seat 21 in addition to the bags 22 and 23.

Fig. 13 shows a cart 35 comprising a frame 24 with wheels 37 which supports the bags 5, 6.

A hand-grip 38 serves to control a brake 39 which cooperates with one of the wheels 37.

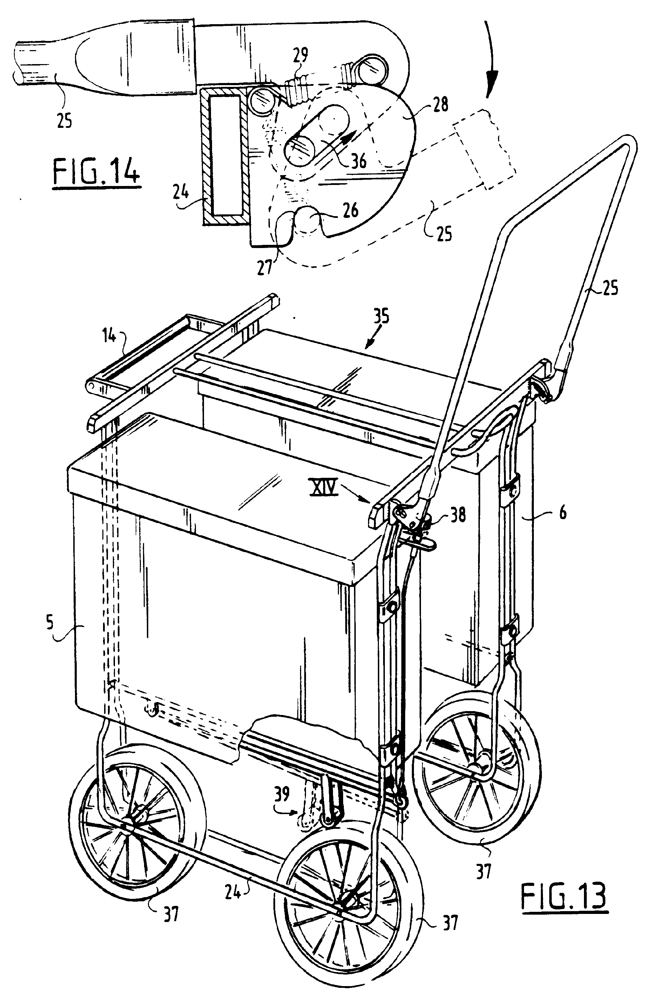

Fig. 14 shows the hinge connection between the bracket-like hand-grip 25 of the cart 35 and the frame 24. As can be seen in fig. 14 the hand-grip 25 can be arranged lockably on both sides by means of a pin 26 in a recess 27 in a locking plate 28 which forms part of the frame 24. Arranged between the locking plate 28 and the hand-grip 25 is a draw spring 29 which serves to hold the hand-grip 25 in locked position, i.e. in the position wherein the pin 26 is held in the recess 27 by the spring 29. In order to enable the sliding movement required for locking and releasing the hand-grip 25 is pivotable in a slotted hole 36.

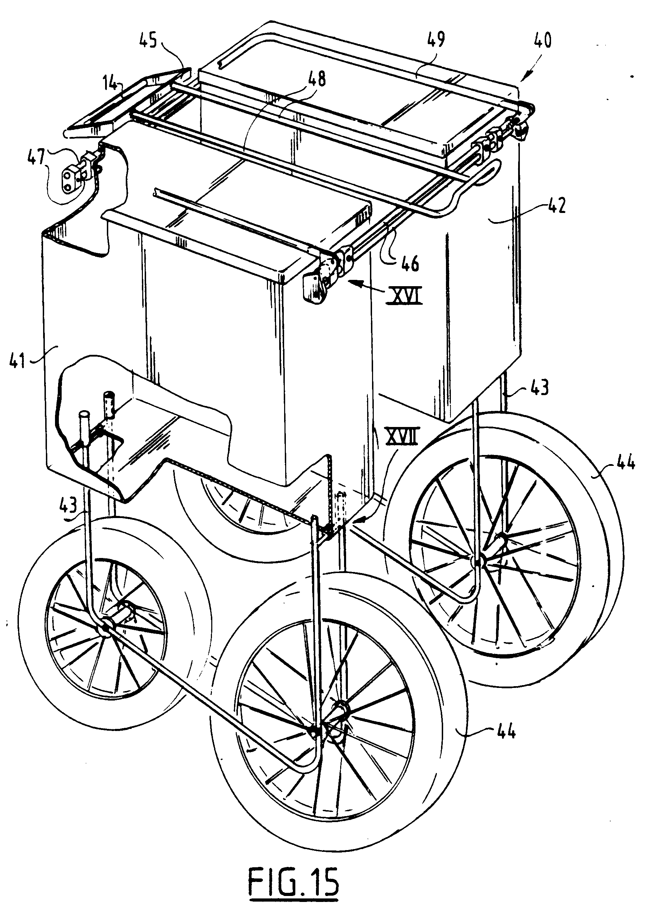

Fig. 15 shows an alternative cart 40. As distinct from the above described embodiments the cart 40 comprises two side bags 41, 42 which have a strength and stiffness such that without strengthening by a frame at that location they ensure the mechanical connection between frame parts 43 which bear wheels 44 and an upper frame designated with 45. This upper frame comprises two transverse rods 46 at the rear, two transverse rods 47 at the front and a longitudinal frame part 48.

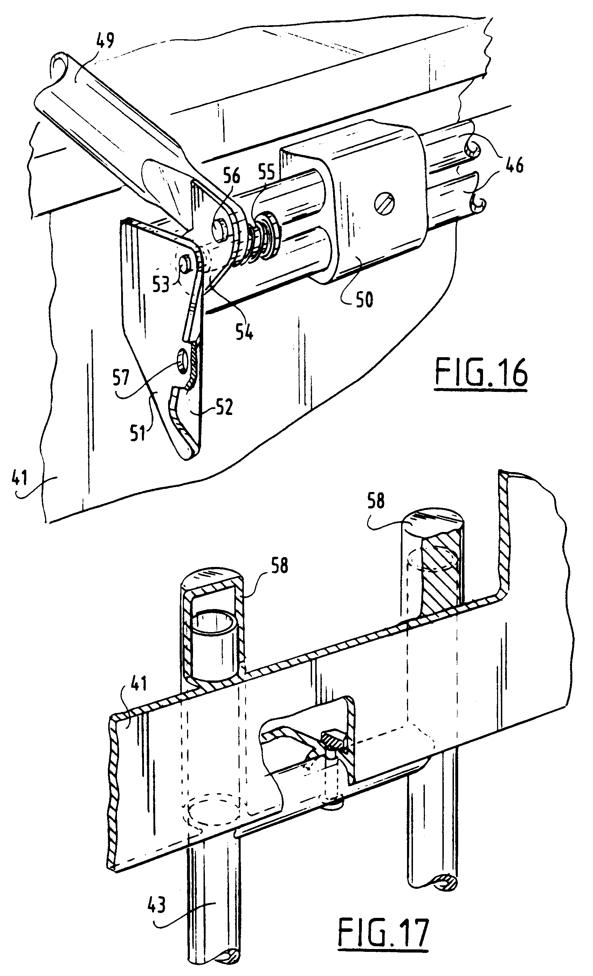

Fig. 16 shows the hinge connection between the bracket-like hand-grip 49 and the bags 41, 42. The transverse rods 46 support the bags 41, 42 via block supports 50 and carry on their ends side pieces 51 with a sloping rise surface 52. The side pieces 51 support hinge pins 53 which in turn support the hand-grip 49 via side pieces 54. Arranged around the hinge pins 53 are compression springs 55 which constrain the side pieces 54 against the side pieces 51. The side pieces 54 further comprise locking studs 56 which in the folded out position of the hand-grip 49 can co-act for locking with locking holes 57 in the side pieces 51. In order to place the bracket 49 in the position shown in fig. 15 the user has to press the bracket 49 inwards close to the hinge connections, whereby the stud 56 is released from the hole 57, whereafter the bracket 49 can be folded forward.

Finally, fig. 17 shows the detail XVII from fig. 15. It will be apparent that the bags 41 comprise receiving sleeves 58 in which are received portions of the lower frame parts 43.

## Claims

1. A combination (1) of a two-wheeled transporting means (2), in particular a bicycle, and a cart (4) provided with wheels (18), which cart (4) can be releasably coupled to the transporting means (2),
characterized in that
the cart (4) is coupled with the transporting means (2) by means of a luggage carrier (3) present on the transporting means (2) and in that the front part of the cart (4) is provided with roller means (14) for rolling over the luggage carrier (3).

2. The combination as claimed in claim 1, **characterized in that** on the front side of the luggage carrier (3) a recess (15) is present in which can rest a front portion of the cart (4).

3. The combination as claimed in claim 1 or 2, **characterized by** locking means (12, 16) for locking the cart (4) to the transporting means (2) by means of a lock (17).

4. The combination as claimed in claim 3, **characterized in that** the cart (4) has a pivoting hand-grip (12) which can be used in a folded out, first stable position to pull or push the cart (4) by hand and which can be used in a folded in, second position as first part of the locking means (12, 16) through co-action with a second part (16) thereof present on the transporting means (2), such as a bracket with holes for passage of the hook of a padlock (17).

5. The combination as claimed in claim 1, **characterized in that** the wheels (18) of the cart and the roller means (14) have a mutual position such that when the cart (4) is removed from the transporting means (2) or arranged thereon, the roller means (14) can support on the luggage carrier (3) at the same time as the wheels (18) rest on the ground.

6. The combination as claimed in any of the foregoing claims, **characterized in that** the height of the wheels (18, 19) is adjustable.

7. The combination as claimed in any of the foregoing claims, **characterized in that** the cart (4) displays a symmetrical construction.

8. The combination as claimed in any of the foregoing claims, **characterized in that** the cart (4) carries at least one bag (5, 6).

9. The combination as claimed in any of the foregoing claims, **characterized in that** the cart (4) comprises a child's seat (21).

10. The combination as claimed in any of the foregoing claims, **characterized in that** the cart (4) comprises a tube frame (13).

11. The combination as claimed in claims 8 and 10, **characterized in that** the or each bag (5, 6) has a sufficient stiffness and strength and that at this position the tube frame (13) is interrupted.

12. The combination as claimed in any of the foregoing claims, **characterized in that** the wheels (18, 19) of the cart have at least a predetermined distance to the ground.

## Patentansprüche

1. Kombination (1) eines zweirädrigen Transportmittels (2), insbesondere eines Fahrrades und eines mit Rädern (18) versehenes Handwagens (4), der lösbar an das Transportmittel (2) ankoppelbar ist;
dadurch **gekennzeichnet**, daß der Handwagen (4) mit dem Transportmittel (2) mittels eines an dem Transportmittel vorgesehenen Gepäckträgers angekuppelt wird, und daß der Vorderteil des Handwagens (4) mit einer Rollenanordnung (14) für das Rollen über den Gepäckträger (3) versehen ist.

2. Kombination nach Anspruch 1,
dadurch **gekennzeichnet**, daß an der Vorderseite des Gepäckträgers (3) eine Aussparung (15) vorhanden ist, in der ein Vorderteil des Handwagens (4) lagern kann.

3. Kombination nach Anspruch 1 oder 2,
**gekennzeichnet** durch Abschließmittel (16) zum Anschließen des Handwagens (4) an das Transportmittel (2) mittels eines Schlosses (17).

4. Kombination nach Anspruch 3,
dadurch **gekennzeichnet**, daß der Handwagen (4) einen schwenkbaren Handgriff (12) hat, der in einer ausgeklappten, ersten stabilen Position dazu verwendet werden kann, den Handwagen (4) von Hand zu ziehen oder zu schieben, und der in einer eingeklappten, zweiten Position dazu verwendet werden kann, als ein erster Teil der Abschließmittel (12, 16) mit einem zweiten Teil (16) derselben, wie beispielsweise einem Bügel mit Löchern für den Durchlaß eines Vorhängeschlosses (17), die am Transportmittel (2) vorhanden ist, zusammenzuwirken.

5. Kombination nach Anspruch 1,
dadurch **gekennzeichnet**, daß die Räder (18) des Handwagens und die Rollenanordnung (14) eine aufeinander bezogene Position haben, die so ist, daß wenn der Handwagen (4) vom Transportmittel (2) entfernt oder auf diesem angeordnet wird, die Rollenanordnung (14) auf dem Gepäckträger (3) aufliegen kann, während gleichzeitig die Räder (18) auf dem Boden aufsitzen.

6. Kombination nach einem der vorstehenden Ansprüche,
dadurch **gekennzeichnet**, daß die Höhe der Räder (18, 19) einstellbar ist.

7. Kombination nach einem der vorstehenden Ansprüche,
dadurch **gekennzeichnet**, daß der Handwagen (4) eine symmetrische Konstruktion aufweist.

8. Kombination nach einem der vorstehenden Ansprüche,
dadurch **gekennzeichnet**, daß der Handwagen (4) wenigstens eine Tasche (5, 6) trägt.

9. Kombination nach einem der vorstehenden Ansprüche,
dadurch **gekennzeichnet**, daß der Handwagen (4) einen Kindersitz (21) aufweist.

10. Kombination nach einem der vorstehenden Ansprüche,
dadurch **gekennzeichnet**, daß der Handwagen (4) einen Rohrrahmen (13) hat.

11. Kombination nach Anspruch 8 und 10,
dadurch **gekennzeichnet**, daß die oder jede Tasche (5, 6) eine ausreichende Steifigkeit und Festigkeit hat, und daß an dieser Position der Rohrrahmen (13) unterbrochen ist.

12. Kombination nach einem der vorstehenden Ansprüche,
dadurch **gekennzeichnet**, daß die Räder wenigstens einen vorbestimmten Abstand zum Boden aufweisen.

## Revendications

1. Combinaison (1) d'un dispositif (2) de transport à deux roues, notamment une bicyclette, et d'un chariot (4) muni de quatre roues (18), ledit chariot (4) pouvant être couplé de façon démontable au dispositif de transport (2), caractérisée en ce que le chariot (4) est couplé avec le dispositif de transport (2) au moyen d'un porte-bagage (3) présent sur le dispositif de transport (2) et en ce que la partie frontale du chariot (4) est munie de moyens (14) à rouleau pour rouler sur le porte-bagage (3).

2. Combinaison selon la revendication 1, caractérisée en ce qu'un évidement (15) est présent sur le côté frontal du porte-bagage (3) dans lequel une partie frontale du chariot (4) peut être posée.

3. Combinaison selon la revendication 1 ou 2, caractérisée par des moyens (12, 16) de verrouillage pour verrouiller le chariot (4) sur le dispositif de transport (2) au moyen d'un organe de verrouillage (17).

4. Combinaison selon la revendication 3, caractérisée en ce que le chariot (4) comporte une poignée de saisie (12) pivotante pouvant être utilisée dans une première position stable pliée vers l'extérieur pour tirer ou pousser le chariot (4) à la main et pouvant être utilisée dans une seconde position pliée vers l'intérieur pour qu'une première partie des moyens (12, 16) de verrouillage coopère avec une seconde partie (16) de ceux-ci, présente sur le dispositif de transport (2), telle qu'une ferrure comportant des trous pour le passage de l'anse d'un cadenas (17).

5. Combinaison selon la revendication 1, caractérisée en ce que les roues (18) du chariot et les moyens (14) à rouleau comportent une position mutuelle telle que lorsque le chariot (4) est déplacé du dispositif de transport (2) ou agencé sur lui, les moyens (14) à rouleau peuvent s'appuyer sur le porte-bagage (3) en même temps que les roues (18) sont portées par le sol.

6. Combinaison selon l'une quelconque des revendications précédentes, caractérisée en ce que la hauteur des roues (18, 19) est réglable.

7. Combinaison selon l'une quelconque des revendications précédentes, caractérisée en ce que le chariot (4) présente une construction symétrique.

8. Combinaison selon l'une quelconque des revendications précédentes, caractérisée en ce que le chariot (4) porte au moins un sac (5, 6).

9. Combinaison selon l'une quelconque des revendications précédentes, caractérisée en ce que le chariot (4) comprend un siège pour enfant (21).

10. Combinaison selon l'une quelconque des revendications précédentes, caractérisée en ce que le chariot (4) comprend un cadre (13) tubulaire.

11. Combinaison selon les revendications 8 et 10, caractérisée en ce que le ou chacun des sacs (5, 6) a une rigidité et une résistance suffisantes et en ce que à cet emplacement le cadre (13) tubulaire est interrompu.

12. Combinaison selon l'une quelconque des revendications précédentes, caractérisée en ce que les roues (18, 19) du chariot sont disposées à au moins une distance prédéterminée du sol.
